# EUROPEAN PATENT APPLICATION

(11) **EP 4 019 383 A1**
(43) Date of publication of application: **29.06.2022**
(21) Application number: 21215323.3
(22) Date of filing: 16.12.2021
(51) Int. Cl.: B62M 3/08

(54) **ELASTIC ASSEMBLY STRUCTURE FOR A BICYCLE PEDAL**

(30) Priority: 25.12.2020 TW 109217149 U
(71) Applicant: Chew Chieng Plastics Co., Ltd., 242063 New Taipei City (TW)
(72) Inventor: Huang, Wen-Ping, 242063 New Taipei City (TW)
(74) Representative: Lang, Christian

(57) **Abstract**

An elastic assembly structure for a bicycle pedal includes a pedal (1), a sole cleat (2) and an elastic element (3). The elastic element (3) is removably connected between the pedal (1) and the sole cleat (2) by a magnet (51). In riding a bicycle, the pedal (1) and the sole cleat (2) are expanded and collected with each other elastically, and a user's leg can lift up and put down a rear edge of the sole spontaneously following a circumferential stepping movement, and the rear end (22) of the sole cleat (2) can lift up and drive the rear end (12) of the pedal (1) elastically through the elastic element (3). Accordingly, the user can stop the bicycle, get off the bicycle or brake the bicycle emergently, simply by lifting up the leg spontaneously to overcome the magnetic force of the magnet (51), allowing the sole cleat (2) to escape from the pedal (1) rapidly, thereby improving the smoothness and safety in riding the bicycle.

## Description

### BACKGROUND OF THE INVENTION

### a) Field of the Invention

The present invention relates to an elastic assembly structure for a bicycle pedal 1 and a user's sole cleat 2, and more particularly to an elastic element 3 and a magnet 51 of the elastic assembly structure.

### b) Description of the Prior Art

In an existing bicycle clipless pedal structure (i.e., the structure of cycling shoe cleat and pedal), a snap structure is used to fix a user's sole on the bicycle pedal. The primary purpose allows a user's soles not to escape from the pedals while riding the bicycle, so as to avoid stepping the pedals idly when riding the bicycle quickly, thereby achieving the function of riding the bicycle rapidly and safely.

For a conventional technology that a user's sole is fixed on the bicycle pedal, a sole cleat is normally provided; before riding a bicycle, the user should lock a sole cleat on a location corresponding to the sole. In the conventional structure, a front end of the sole cleat is usually provided with a protruded hook, a front end of the pedal is provided with a snap ring, and a rear end of the pedal is provided with a grip or snap structure. While using the sole cleat, the hook on the front end of the sole cleat is extended into the snap ring at the front end of the pedal, and a rear end of the sole cleat is pressed down into the grip or snap structure, so that the front end of the sole cleat can be fixed on the front end of the pedal, and the rear end of the sole cleat can be fixed on the rear end of the pedal.

However, as the front end and the rear end of the conventional sole cleat are all fixed on the pedal, and the rear end of the sole cleat is snapped into the grip or snap structure at the rear end of the pedal, if the user wants to stop the bicycle or get off the bicycle, he or she has to twist ankles to escape the rear ends of the sole cleats from the said grip or snap structure, so that the feet can be lifted up from the pedals and moved onto the ground. Nevertheless, in an emergency condition (e.g., braking the bicycle) or due to that the user is not familiar with operating the sole cleat, the user may directly lift up the feet from the pedals without twisting the ankles in time or forgetting to twist the ankles. It will inevitably cause crash or the user falling off the bicycle as the sole cleats are still fixed on the pedals, thereby affecting the safety in riding the bicycle severely.

Accordingly, an elastic assembly structure for a bicycle pedal is disclosed to improve the abovementioned shortcomings in the prior art.

### SUMMARY OF THE INVENTION

Accordingly, a primary object of the present invention is to provide an elastic assembly structure for a bicycle pedal. The elastic assembly structure includes a pedal, two ends of which are provided respectively with a front end and a rear end, with the front end of the pedal being provided with a rabbet; a sole cleat, two ends of which are provided respectively with a front end and a rear end, with the front end of the sole cleat being provided with a close-fit member to be latched into the rabbet; and at least an elastic element, which is removably connected between the rear end of the pedal and the rear end of the shoe cleat.

According to the abovementioned technical features, in using the elastic assembly structure, the sole cleat is locked on a sole in advance, and then the sole is assembled elastically on the pedal by the sole cleat. When a user rides the bicycle, the rear end of the sole cleat can be put down and attached tightly to the rear end of the pedal, so that by the elastic collection of the elastic element between the rear end of the pedal and the rear end of the sole cleat, the rear end of the sole cleat can be bent and moved upward, allowing the rear end of the pedal and the rear end of the sole cleat to be expanded elastically with respect to each other by the elastic element. In other words, the user can lift up and put down a rear edge of the sole spontaneously following the movement of foot. In the meantime, the rear end of the sole cleat can lift up and drive the rear end of the pedal by the elasticity of the elastic element. When the user wants to stop the bicycle, get off the bicycle or brake the bicycle emergently in riding the bicycle, he or she only needs to lift up the foot and then the magnetic force of the magnet can be overcome, so that the sole cleat can escape from the pedal quickly, thereby improving the smoothness and safety in riding the bicycle. In addition, the shortcomings in the prior art that the bicycle crashes and the user falls off the bicycle due to the non-smoothness in stepping movement and the lifting of foot without twisting the ankle can be improved.

According to the abovementioned technical features, the rear end of the pedal is provided with a first assembly piece, an end of the elastic element is fixed on a bottom of the rear end of the sole cleat, the other end of the elastic element is provided with a second assembly piece, and the first assembly piece and the second assembly piece can be assembled together and separated from each other. Or, the rear end of the sole cleat is provided with a first assembly piece, an end of the elastic element is fixed on a top of the rear end of the pedal, the other end of the elastic element is provided with a second assembly piece, and the first assembly piece and the second assembly piece can be assembled together and separated from each other.

According to the abovementioned technical features, the first assembly piece can be at least a magnet, and the second assembly piece can be a metallic bottom plate or magnet.

According to the abovementioned technical features, the magnet is disposed on the top of rear end of the pedal, the rear end of the sole cleat is provided with a guide slot facing the top of rear end of the pedal, the metallic bottom plate is disposed in the guide slot, the elastic element is configured in the guide slot, an end of the elastic element is disposed on an inner wall of the guide slot, and the other end of the elastic element is connected on the metallic bottom plate.

According to the abovementioned technical features, the top of rear end of the pedal is provided with a receiving slot, the magnet is disposed in the receiving slot, the guide slot is provided with a slot opening facing the top of rear end of the pedal, the inner wall of the guide slot is provided at least with a guide rail which is extended to the slot opening, a periphery of the metallic bottom plate is provided at least with a lug plate, the lug plate is provided with a dent, the dent is sheathed on the guide rail to guide the metallic bottom plate to move along the guide rail, and the inner wall of the slot opening is provided at least with a rib to stop the lug plate.

According to the abovementioned technical features, the metallic bottom plate and the elastic element are assembled together by a mounting bracket.

According to the abovementioned technical features, the said magnet is plural, including one large magnet and two small magnets, three magnets in an average size or four magnets. The adsorbability of the one large and two small magnets is between 3400 GS and 5100 GS, the adsorbability of the three magnets in the average size is between 4200 GS and 5200 GS, and the adsorbability of the said four magnets is between 4000 GS and 5100 GS.

According to the abovementioned technical features, the magnet is provided with a magnetic permeable metal strip.

According to the abovementioned technical features, the adsorbability of the magnet is between 2800 GS and 5200 GS.

According to the abovementioned technical features, the elastic element can be a spring.

According to the abovementioned technical features, an exterior side to the rear end of the sole cleat is provided with a rear baffle on the top of rear end of the pedal.

According to the abovementioned technical features, two sides of the rear end of the sole cleat are provided respectively with a support member, and the said support member can be sheathed on each side of the rear end of the pedal, so as to guide the rear end of the sole cleat to dock with the rear end of the pedal.

According to the abovementioned technical features, a side of the pedal is provided with a spindle bore, an interior of the spindle bore is pivoted with a shaft of crank, the shaft is sheathed with plural ball bearings, and the sole cleat is provided with plural lock holes.

According to the abovementioned technical features, an inner wall on a top of the rabbet is provided with an inner inclined plane, an outer wall on a top of the close-fit member is provided with an outer inclined plane which can be attached onto the inner inclined plane, the inner inclined plane and the outer inclined plane can be latched together in a roughly tilted L-shape, and the L-shaped corner is an arc. An included angle between the inner inclined plane and the horizontal plane is between 55° and 75°, and an included angle between the outer inclined plane and the horizontal plane is between 55° and 75°.

According to the abovementioned technical features, a bottom of the close-fit member is provided with a concave surface, and a gap is formed between the concave surface and the inner wall of rabbet.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a three-dimensional view of a preferred embodiment of the present invention.
FIG. 2 shows a three-dimensional exploded view of FIG. 1.
FIG. 3 shows a three-dimensional exploded view of FIG. 2 at another viewing angle.
FIG. 4 shows a three-dimensional exploded view of a pedal in FIG. 2.
FIG. 5 shows a three-dimensional exploded view of a sole cleat in FIG. 2.
FIG. 6 shows a cutaway view of FIG. 1.
FIG. 7 shows a cutaway view of a usage state in FIG. 6.
FIG. 8 shows a schematic view of a usage state in FIG. 1.
FIG. 9 shows a schematic view of another usage state in FIG. 1.
FIG. 10 shows a schematic view of a sequence of still another usage state in FIG. 1.
FIG. 11 shows a cutaway view of another usage state in FIG. 6.
FIG. 12 shows a schematic view of yet still another usage state in FIG. 1.
FIG. 13 shows a three-dimensional view of a feasible embodiment of FIG. 1.
FIG. 14 shows a top view of another feasible embodiment of FIG. 1.
FIG. 15 shows a top view of still another feasible embodiment of FIG. 1.
FIG. 16 shows a top view of yet another feasible embodiment of FIG. 1.
FIG. 17 shows a top view of another usage state in FIG. 16.

### DETAILED DESCRIPTION OF THE PREFERRED EMBODIMENTS

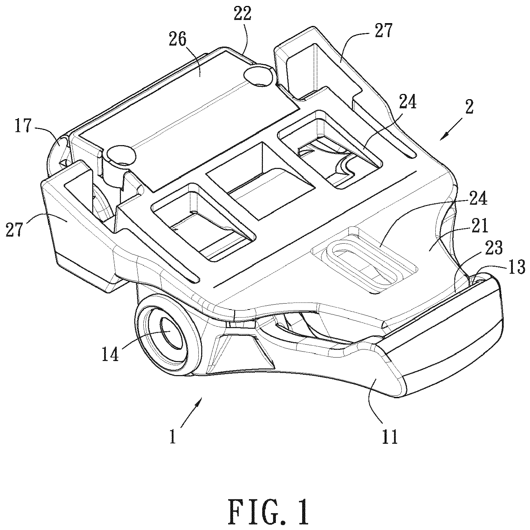

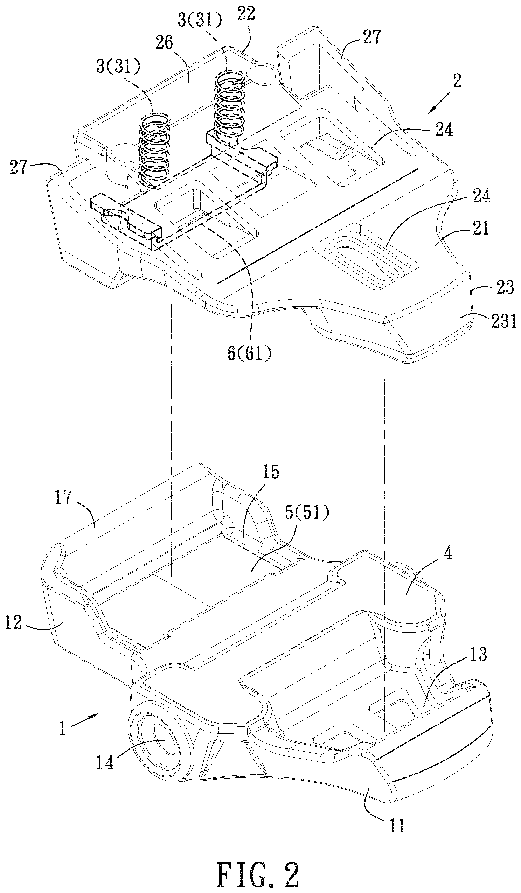

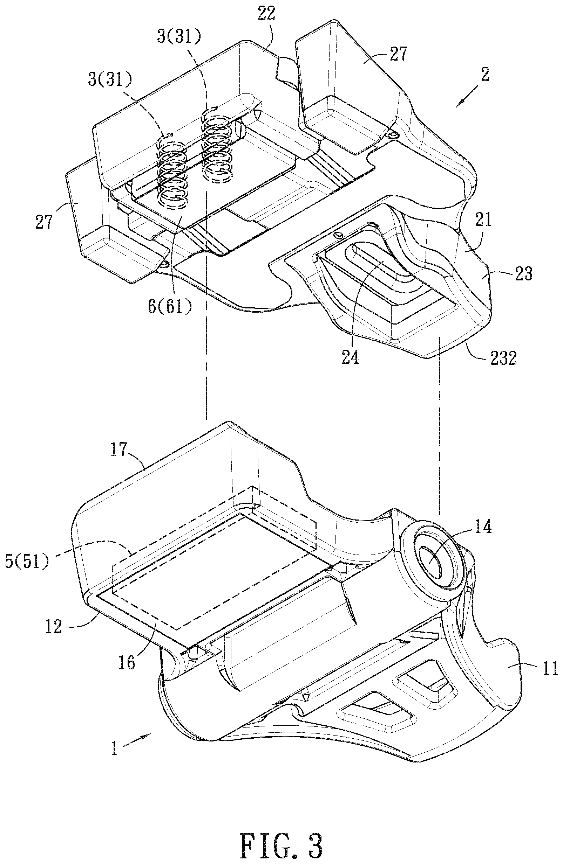

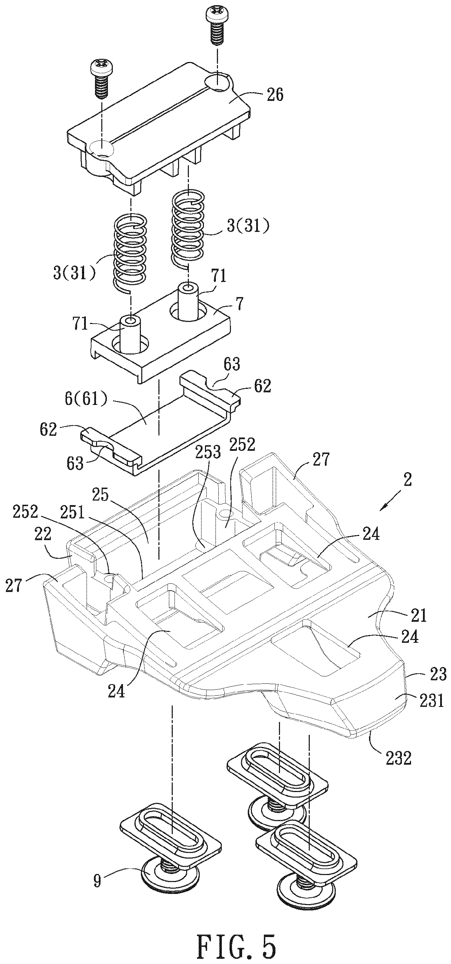

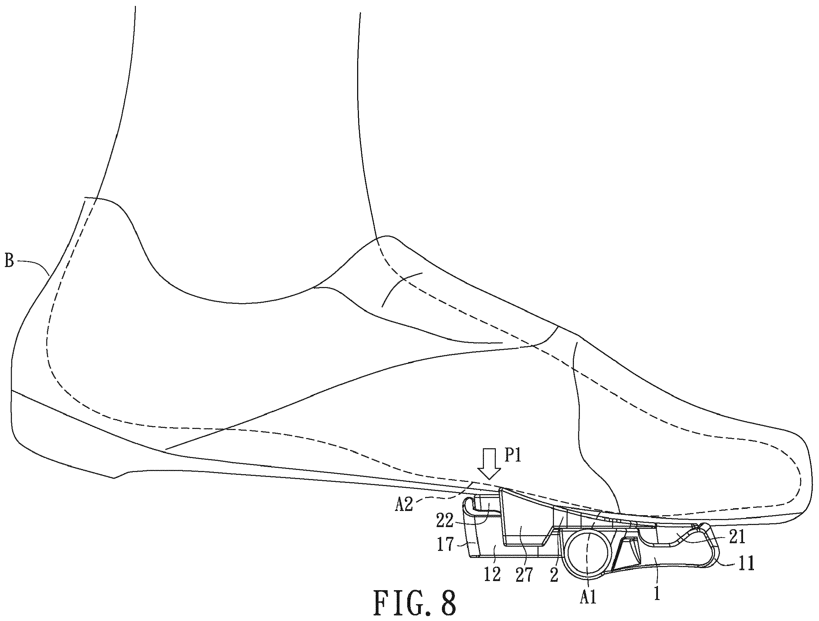

Referring to FIGS. 1 to 3, a preferred embodiment of an elastic assembly structure for a bicycle pedal according to the present invention, comprises primarily a pedal 1, a sole cleat 2 and at least an elastic element 3. Two ends of the pedal 1 are provided respectively with a front end 11 and a rear end 12, the front end 11 of the pedal 1 is provided with a rabbet 13, and a side of the pedal 1 is provided with a spindle bore 14, which allows the pedal 1 to be pivoted on a crank of the pedal 1. A top of middle section of the pedal 1 is provided with an anti-abrasion board 4 made of stainless steel. Two ends of the sole cleat 2 are provided respectively with a front end 21 and a rear end 22, and the front end 21 of the sole cleat 2 is provided with a close-fit member 23 which can be latched into the rabbet 13. The sole cleat 2 is provided with plural lock holes 24 which can be transfixed with screw bolts 9 (as shown in FIG. 5), thereby locking the sole cleat 2 on a bottom of user's shoe B corresponding to a sole A1 (as shown in FIG. 8).

The elastic element 3 can be removably connected between the rear end 12 of the pedal 1 and the rear end 22 of the sole cleat 2. Specifically, the elastic element 3 described in the present embodiment can be a spring 31. The rear end 12 of the pedal 1 is provided with a first assembly piece 5 which can be at least a magnet 51 with the adsorbability between 2800 GS and 5200 GS. An end of the elastic element 3 (spring 31) is fixed on a bottom of rear end 22 of the sole cleat 2, and the other end of the elastic element 3 (spring 31) is provided with a second assembly piece 6 which can be a metallic bottom plate 61 or magnet 51. The first assembly piece 5 (magnet 51) and the second assembly piece 6 (metallic bottom plate 61 or magnet 51) can be assembled together and separated from each other.

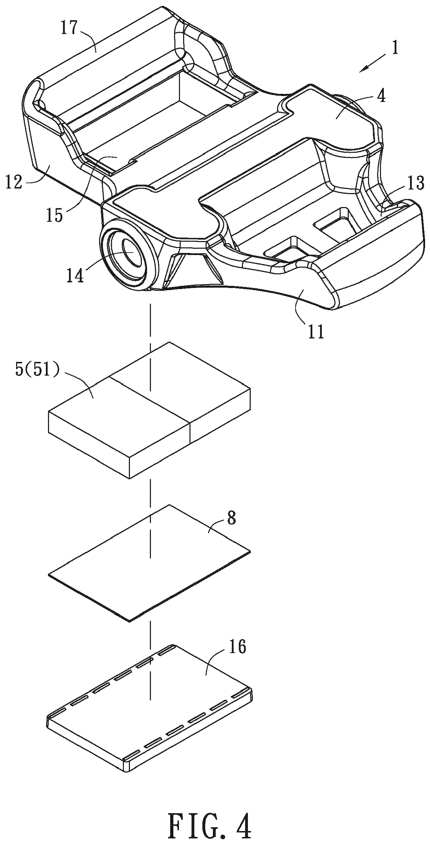

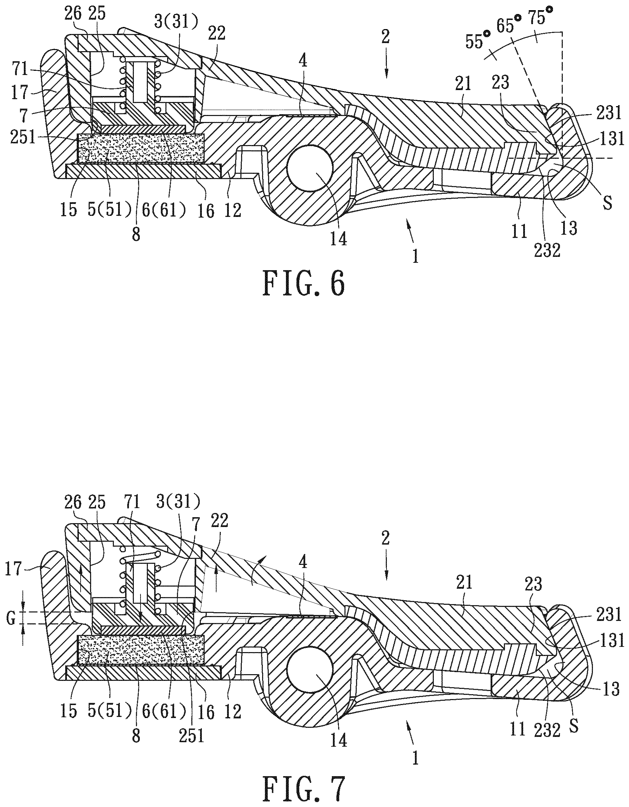

Referring to FIG. 4 and FIG. 6, a top of rear end 12 of the pedal 1 is provided with a receiving slot 15, and the receiving slot 15 is connected between the top of rear end 12 of the pedal 1 and a bottom of rear end 12 of the pedal 1. The bottom of rear end 12 of the pedal 1 is provided with a bottom plate 16 to seal a bottom of the receiving slot 15. The receiving slot 15 is opened upward from the top of rear end 12 of the pedal 1, and the magnet 51 is disposed in the receiving slot 15, on the top of rear end 12 of the pedal 1. Exterior to a slot opening of the receiving slot 15 on the top of rear end 12 of the pedal 1 is provided with a rear baffle 17, which is disposed on an exterior side to the rear end 22 of the sole cleat 2.

Referring to FIGS. 5 to 7, the rear end 22 of the sole cleat 2 is provided with a vertical guide slot 25 facing the top of rear end 12 of the pedal 1, and the guide slot 25 is connected between the top of rear end 22 of the sole cleat 2 and the bottom of rear end 22 of the sole cleat 2. The top of rear end 22 of the sole cleat 2 is provided with a dust cover 26 to seal a top of the guide slot 25. The guide slot 25 is provided with a slot opening 251 toward the top of rear end 12 of the pedal 1, and an inner wall of the guide slot 25 is provided at least with a guide rail 252 which is extended vertically into the slot opening 251 (as shown in FIG. 5). The said guide rail 252 in the present embodiment is disposed respectively on the inner wall at two sides of the guide slot 25. The metallic bottom plate 61 is disposed in the guide slot 25, and a periphery of the metallic bottom plate 61 is provided at least with a lug plate 62. The said lug plate 62 in the present embodiment is disposed respectively on a side of the metallic bottom plate 61, and is provided with a dent 63. The dent 63 is sheathed on the guide rail 252, so as to guide the metallic bottom plate 61 to move up and down in the guide slot 25 along the guide rail 252. An inner wall of the slot opening 251 of the guide slot 25 is provided at least with a rib 253 to stop the lug plate 62 of the metallic bottom plate 61, preventing the metallic bottom plate 61 from moving in the guide slot 25. The said two ribs 253 in the present embodiment are disposed respectively on the inner wall at each side of the slot opening 251 of the guide slot 25.

In addition, the elastic element 3 (spring 31) described in the present embodiment can be plural and disposed in the guide slot 25. An end of the elastic element 3 (spring 31) is disposed on the inner wall of the guide slot 25, whereas the other end of the elastic element 3 (spring 31) is connected on a top of the metallic bottom plate 61. Specifically, the metallic bottom plate 61 and the elastic element 3 are assembled together by a spring mounting bracket 7, and the mounting bracket 7 is fixed on the top of metallic bottom plate 61. A top of the mounting bracket 7 is provided with plural locating pillars 71, and a top of the spring 31 is disposed on an inner wall of the dust cover 26; whereas, a bottom of the spring 31 is sheathed on the locating pillar 71.

Referring to FIG. 6 and FIG. 8, upon using the elastic assembly structure, the sole cleat 2 is first locked on a bottom of the shoe B, corresponding to the sole A1. Next, the close-fit member 23 on the front end 21 of the sole cleat 2 is latched into the rabbet 13 at the front end 11 of the pedal 1, allowing the front end 21 of the sole cleat 2 to be assembled on the front end 11 of the pedal 1. Then, a rear edge A2 of the user's sole A1 is acted upon by a downward pressure P1 to the rear end 22 of the sole cleat 2, and the rear end 22 of the sole cleat 2 is pressed downward to attach the rear end 12 of the pedal 1, so that the magnet 51 on the top of rear end 12 of the pedal 1 can attract the metallic bottom plate 61 on the bottom of rear end 22 of the sole cleat 2, thereby enabling the rear end 22 of the sole cleat 2 to be assembled elastically on the rear end 12 of the pedal 1, and the rear baffle 17 to be stopped at an exterior side to the rear end 22 of the sole cleat 2.

Referring to FIG. 6, FIG. 8, and FIG. 10(A) to FIG. 10(D), when the user steps the pedal 1 forward and downward circumferentially, his or her thigh and shank will also be extended forward and downward. At this time, the part of rear edge A2 of the sole A1 of a shoe B will spontaneously drive down the rear end 22 of the sole cleat 2 to attach tightly on the rear end 12 of the pedal 1, thereby forcing the metallic bottom plate 61 to compress the spring 31 upward, so that the rear end 12 of the pedal 1 and the rear end 22 of the sole cleat 2 can be collected with each other elastically.

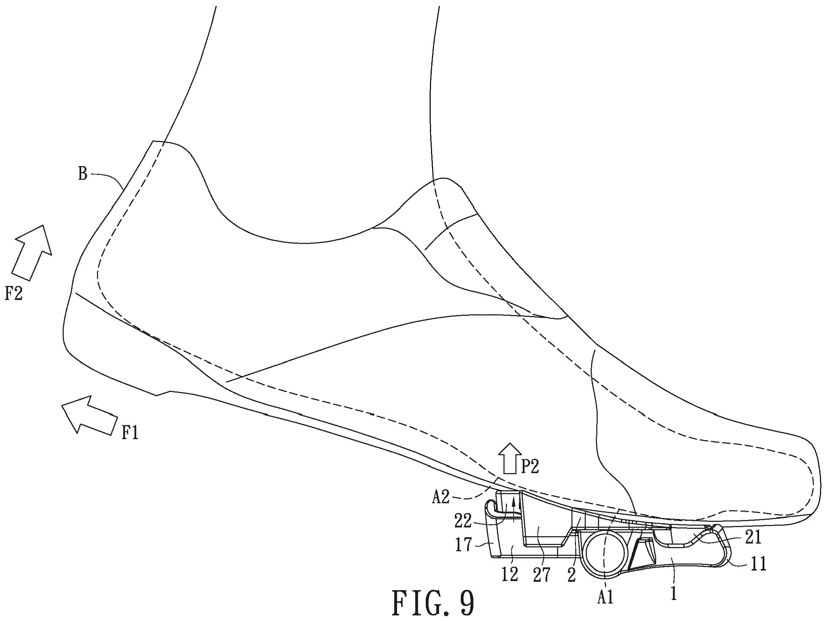

Referring to FIG. 7, FIG. 9, and FIG. 10(E) to FIG. 10(H), when the user steps the pedal 1 backward and upward circumferentially, his or her thigh and shank will also be bended backward F1 and upward F2. At this time, the rear edge A2 of the sole A1 will generate an upward pull force P2 along with the movement of shank, allowing the part of rear edge A2 of the sole A1 of shoe B to bend upward a little spontaneously, so as to drive the rear end 22 of the sole cleat 2 to bend upward. In addition, a bottom of the spring 31 is fixed on the magnet 51 of the rear end 12 of the pedal 1 through magnetic attraction of the metallic bottom plate 61, allowing the spring 31 to extend upward by a height G elastically, and enabling the rear end 12 of the pedal 1 and the rear end 22 of the sole cleat 2 to expand elastically with respect to each other. At this time, the rear end 22 of the sole cleat 2 can also lift up and drive the rear end 12 of the pedal 1 to move up elastically through the elasticity of the extended spring 31. Therefore, the user can spontaneously lift up and put down the rear edge A2 of sole A1 along with the circumferential stepping of legs, thereby improving the smoothness in riding the bicycle.

Referring to FIG. 7, FIG. 9, and FIG. 10(D) to FIG. 10(F), when the user hooks up the pedal 1 to step backward F1 and upward F2 circumferentially, the rear end 22 of the sole cleat 2 will be abutted backward onto an inner side of the rear baffle 17, which stops the sole cleat 2 from escaping from the pedal 1 backward by the rear baffle 17, thereby further improving the stability between the sole cleat 2 and the pedal 1.

Referring to FIG. 6 and FIG. 7, an inner wall on top of the rabbet 13 is provided with an inner inclined plane 131, and an outer wall on top of the close-fit member 23 is provided with an outer inclined plane 231 which can be attached onto the inner inclined plane 131. The inner inclined plane 131 and the outer inclined plane 231 can be latched together in a roughly tilted L-shape, and the L-shaped corner is an arc. As shown in the drawings, an included angle between the inner inclined plane 131 and the horizontal plane is about 65°, and an included angle between the outer inclined plane 231 and the horizontal plane is also about 65°; however, any angle between 55° and 75° can be implemented. When the close-fit member 23 is latched into the rabbet 13, the outer inclined plane 231 of the close-fit member 23 is attached exactly onto the inner inclined plane 131 of the rabbet 13. When the user steps the pedal 1, the inner inclined plane 131 of the rabbet 13 can be stopped in front of and above the close-fit member 23, which positions the close-fit member 23 into the rabbet 13 stably. A bottom of the close-fit member 23 is provided with a concave surface 232. When the close-fit member 23 is latched into the rabbet 13, a gap S can be formed between the concave surface 232 and the inner wall of rabbet 13, thereby providing an effect that the close-fit member 23 of the sole cleat 2 can escape from the rabbet 13 easily. In other words, the gap S can prevent forming an airtight latching state when the close-fit member 23 is latched into the rabbet 13; this airtight latching state will cause the close-fit member 23 not to escape from the rabbet 13 easily.

Notably, in the present embodiment, by the stopping function that the abovementioned close-fit member 23 is latched into the rabbet 13, and the stopping function of the rear baffle 17, the rear end 12 of the pedal 1 only needs to be provided with the magnet 51 with basic magnetic attraction that when the magnet 51 attracts the metallic bottom plate 61 on the bottom of rear end 22 of sole cleat 2 to extend the spring 31 elastically, the rear baffle 17 will be stopped at an outer side of the rear end 22 of the sole cleat 2. As described above, when the user hooks up the pedal 1, the upward F2 force and the backward F1 force exerted by the legs are stopped in front by the latching of the close-fit member 23 into the rabbet 13, and are stopped in back by the rear baffle 17. Therefore, even the magnet 51 is only provided with limited magnetic attraction, the sole cleat 2 will still not escape from the pedal 1. In addition, due to the stopping from the rear baffle 17 and the attraction from the magnet 51, the close-fit member 23 and the rabbet 13 can be only latched together in the roughly tilted L-shape (the L-shaped corner is in a shape of arc), without other tenon or snap-fit structure. Moreover, with the gap S formed between the concave surface 232 on the bottom of close-fit member 23 and the inner wall of rabbet 13, the effect that the close-fit member 23 can escape from the rabbet 13 easily can be achieved.

Furthermore, by the fitting of abovementioned elements, the rabbet 13 and the close-fit member 23 only need to be latched together in the roughly tilted L-shape, with the tilt angle between 55° and 75°. Therefore, when the user wants to stop the bicycle, get off the bicycle or brake the bicycle emergently while riding the bicycle, he or she only needs to lift up the foot spontaneously and then the magnetic force of the magnet 51 can be overcome, so that the sole cleat 2 can escape from the pedal 1 rapidly and freely, thereby assuring the safety in riding the bicycle.

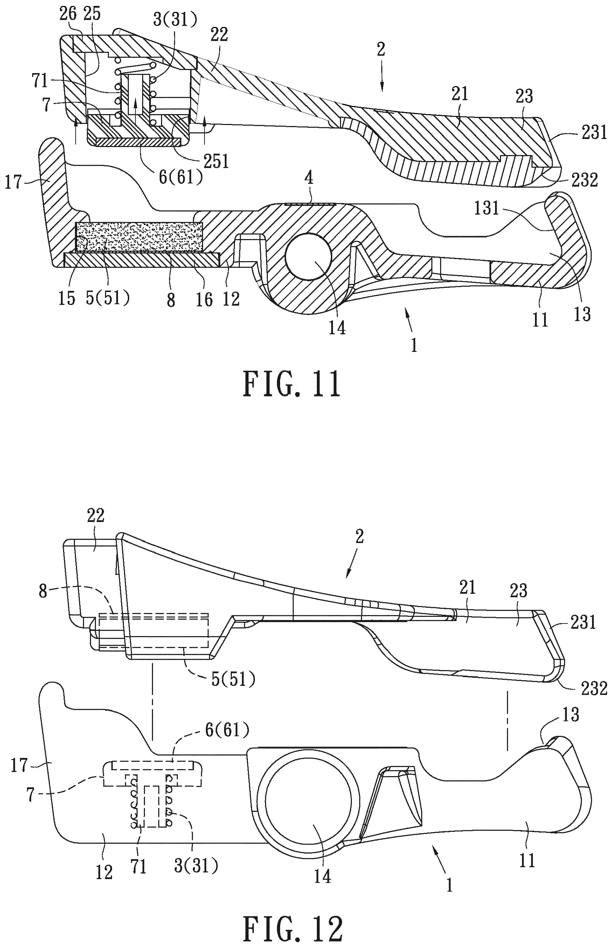

Referring to FIG. 11, as described above, when the user wants to stop emergently, get off emergently or brake the bicycle emergently while riding the bicycle, and when he or she needs to lift up the foot (sole A1, shoe B, and sole cleat 2) from the pedal 1 and move the foot onto the ground, as the magnet 51 only needs to be provided with the basic magnetic force, the user also only needs to lift up the foot spontaneously to overcome the magnetic force of the magnet 51, and then the sole cleat 2 can be driven to escape rapidly from the pedal 1, with the foot being lifted up from the pedal 1 spontaneously (intuitively) and moved onto the ground. Therefore, there will be no dangerous condition as in the prior art where the bicycle will crash and the user will fall off the bicycle as he or she failed to twist the ankle or did not twist the ankle in time to lift up the foot, thereby improving effectively the safety in riding the bicycle.

Accordingly, the technical features of the present invention lie in that as the elastic element 3 (spring 31), the close-fit member 23 and the rabbet 13, the rear baffle 17 and the magnet 51 are used together in coordination, the magnet 51 only needs to be provided with the limited adsorbability that the effect that the clipless pedal can be released easily can be achieved, with the adsorbability of the magnet 51 between 2800 GS and 4500 GS.

Referring to FIG. 4 and FIG. 6, the magnet 51 can be also overlapped with a magnetic permeable metal strip 8, and depending upon the practical need of user, the magnetic attraction of the magnet 51 can be increased by a magnetic field loop formed between the magnet 51 and the magnetic permeable metal strip 8.

Referring to FIGS. 1 to 3, two sides on the rear end 22 of the sole cleat 2 can be also provided respectively with a support member 27. When the rear end 22 of the sole cleat 2 is elastically assembled on the rear end 12 of the pedal 1, the said support members 27 can be sheathed on the two sides of the rear end 12 of the pedal 1, so as to guide the rear end 22 of the sole cleat 2 to dock with the rear end 12 of the pedal 1.

Referring to FIG. 12, in addition, the bottom of the rear end 22 of the sole cleat 2 can be also provided with a first assembly piece 5 (magnet 51). The bottom of the elastic element 3 (spring 31) is fixed on the top of the rear end 12 of the pedal 1, and the top of the elastic element 3 is provided with a second assembly piece 6 (metallic bottom plate 61). The first assembly piece 5 and the second assembly piece 6 can be assembled together and separated from each other, so that the rear end 12 of the pedal 1 and the rear end 22 of the sole cleat 2 can be expanded and collected elastically with respect to each other, and the rear end 22 of the sole cleat 2 can lift up and drive the rear end 12 of the pedal 1 through elasticity of the elastic element 3.

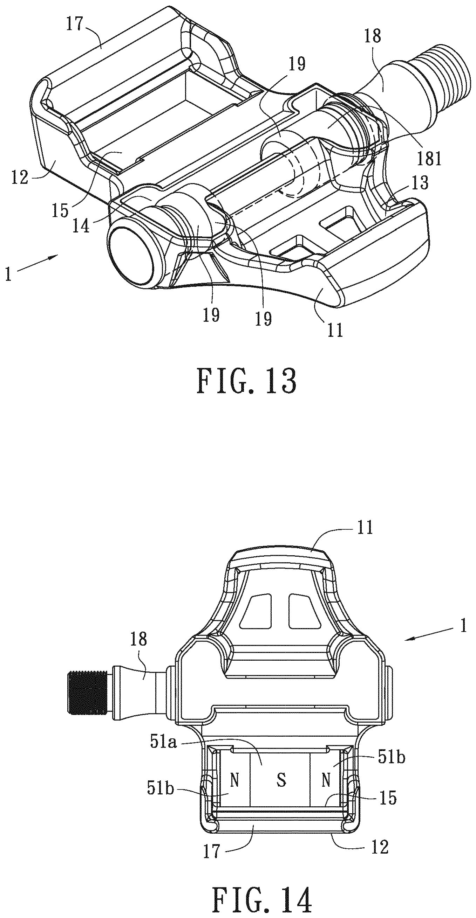

Referring to FIG. 13, an interior of the spindle bore 14 of the pedal 1 is pivoted with a shaft 18 of crank, the shaft 18 is sheathed with plural ball bearings 19, and an end of the spindle bore 14 on the shaft 18 is provided with a diffuser member 181. The said ball bearings 19 are sheathed respectively on the other end of the spindle bore 14 on the shaft 18 and on the location close to the diffuser member 181, so as to increase the structural strength of the shaft 18 being pivoted in the spindle bore 14 of the pedal 1.

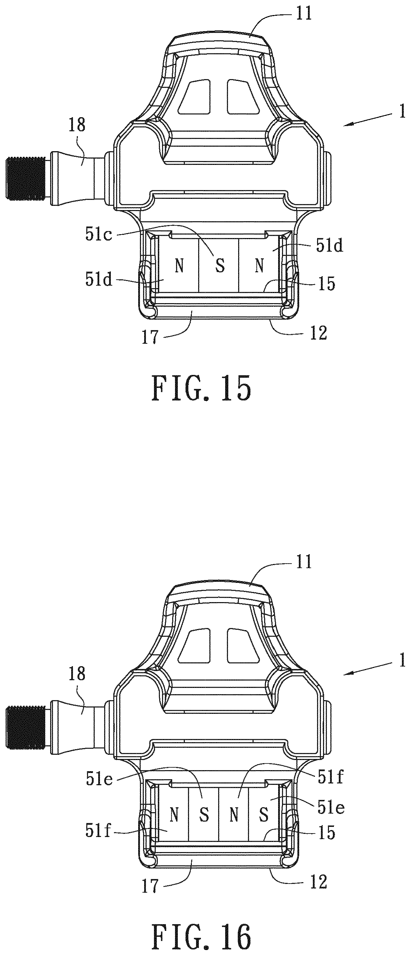

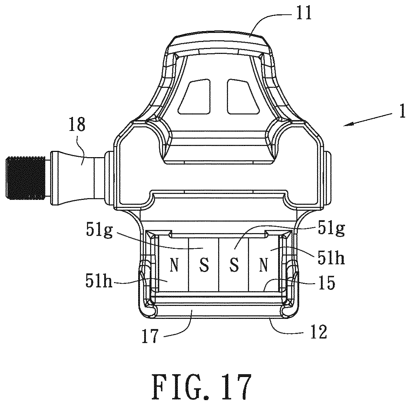

Referring to FIGS. 14 to 17, the said magnet 51 is plural, including one large magnet and two small magnets 51a, 51b, three magnets in an average size 51c, 51d, four magnets 51e, 51f, or four magnets 51g, 51h. According to the principle of magnetic force in electromagnetics, magnets are arranged in various sizes, quantities and polarities (S-pole and N-pole), resulting in different direction of magnetic line of force and absorbability. Four feasible embodiments in the present invention are disclosed below, with that the arrangement of each embodiment can provide various adsorbability depending upon the user's requirement.

In the said one large magnet and two small magnets 51a, 51b, the large magnet 51a can be an S-pole magnet 51a, and the two small magnets 51b can be an N-pole magnet 51b. The large magnet 51a is disposed between the two small magnets 51b, so that the said magnets 51a, 51b are arranged orderly in N-pole, S-pole, N-pole. The adsorbability of the said one large and two small magnets 51a, 51b is between 3400 GS and 5100 GS.

In the said three magnets in the average size 51c, 51d, the magnet 51c can be an S-pole magnet 51c, and the magnets 51d can be an N-pole magnet 51d, so that the said magnets 51c, 51d are arranged orderly in N-pole, S-pole, N-pole. The adsorbability of the said three magnets in the average size 51c, 51d is between 4200 GS and 5200 GS.

In the said four magnets 51e, 51f, the magnets 51e can be an S-pole magnet 51e, and the magnets 51f can be an N-pole magnet 51f, so that the said magnets 51e, 51f are arranged orderly in N-pole, S-pole, N-pole, S-pole. The adsorbability of the said four magnets 51e, 51f is between 4000 GS and 5100 GS.

In the said four magnets 51g, 51h, the magnets 51g can be an S-pole magnet 51g, and the magnets 51h can be an N-pole magnet 51h, so that the said magnets 51g, 51h are arranged orderly in N-pole, S-pole, S-pole, N-pole. The adsorbability of the said four magnets 51g, 51h is between 4000 GS and 5100 GS.

The abovementioned magnets can be also arranged orderly in S-pole, N-pole, S-pole, or can be arranged orderly in S-pole, N-pole, N-pole, S-pole. Accordingly, the adsorbing force of the magnet 51 of the pedal 1 to attract the metallic bottom plate 61 of the sole cleat 2 can be enhanced, which improves the stability in combining the first assembly piece 5 (magnet 51) and the second assembly piece 6 (metallic bottom plate 61).

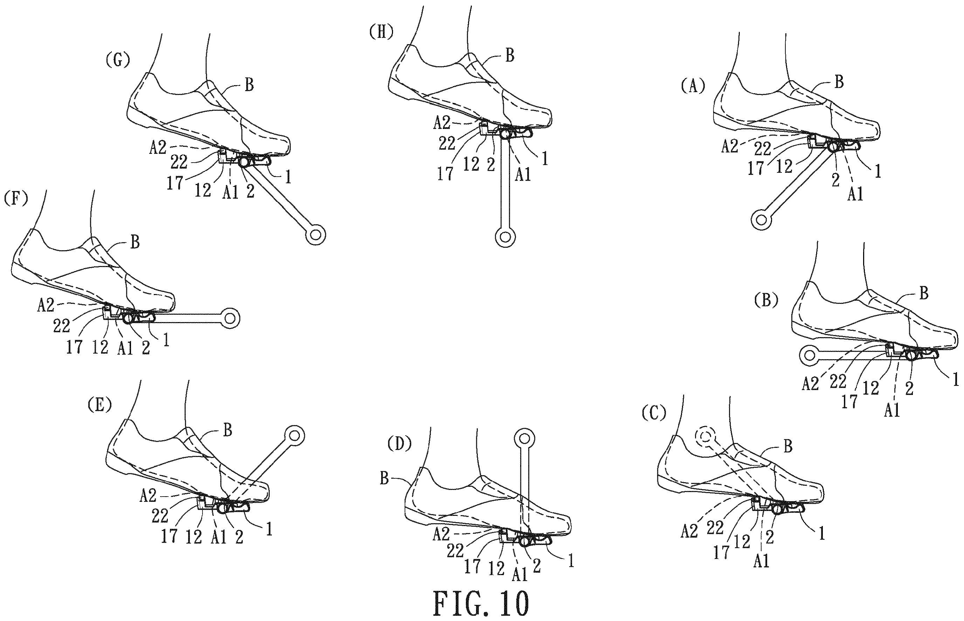

In comparison to the prior art, the present invention is provided with following advantages:
1. The smoothness in stepping the bicycle pedal 1 and the efficiency in stepping are improved that
   (a) The strength of legs in stepping is not wasted, and can be transformed into the riding speed effectively.
   (b) The user can feel the actual stepping effect while riding uphill or riding in a long time.
   (c) The pedal 1 is fixed on the best position on the sole, which can reduce the exhaustion in riding a long road, can keep the best riding position and maintain good coordination.
   (d) When the user rides the bicycle and steps the pedal 1 forward and downward circumferentially as the states of FIG. 10(B) to FIG. 10(D), the steady stepping movement will drive the front thigh muscles, and thus, a good and correct movement can be maintained. On the other hand, when the user hooks the pedal 1 backward and upward as the states of FIG. 10(E) to FIG. 10(F), the sole cleat 2 will attract the pedal 1 upward through the magnet 51, which can intensity the force of hamstrings and distribute the tight tension in the front thigh muscles, so as to achieve the good circumferential stepping effect.
2. The safety in riding the bicycle is improved that
   (a) A suitable aiding equipment should be used in the area of professional sports, mainly to protect oneself from sports injury. In the present invention, the spring 31 connected between the sole cleat 2 and the pedal 1 can solve the issue that many people are afraid of entering into the area of clipless pedal.
   (b) In riding the bicycle, the conventional clipless pedal cannot escape easily if one wants to stop the bicycle, which causes the bicycle to crash. The present invention can specifically prevent that the feet are powerless and stiff while climbing or going down a hill, which causes the feet to not rotate spontaneously, so that the feet cannot escape from the clipless pedal successfully and the bicycle crashes.
   (c) In riding the bicycle, when a beginner wants to stop the bicycle, get off the bicycle or brake the bicycle emergently, as he or she is not fully familiar with using the clipless pedal, the beginner can specifically forget to escape from the clipless pedal in time and fall off. For example, when the bicycle stops at a traffic light, the rider does not pay attention to escape from the clipless pedal and thus loses his or her center of gravity, and the rider is not familiar with using a dominant foot to escape from the clipless pedal, which results in the crash easily. The elastic assembly structure for the bicycle pedal, according to the present invention, can avoid this kind of condition.
3. A bad riding position can be improved. If one continues to use the conventional pedal, an improper stepping position such as that the heel is downward and splayfooted or a bad habit of stepping downward in brute force can be developed eventually, which can easily hurt the knees and cause the legs to cramp. On the other hand, by the assembly structure of sole cleat 2, pedal 1 and elastic element 3, according to the present invention, both feet can be fixed on the pedal 1, which can correct the original habit that the stepping is misplaced, thereby assuring the correct riding position.
4. The stability and safety is improved. By the assembly structure of sole cleat 2, pedal 1 and elastic element 3, according to the present invention, even when a pothole or bumpy road is encountered, or when one climbs a hill, passes another vehicle or steps in high revolution, both feet can still be fixed on the pedal 1 stably, thereby avoiding danger by stepping the pedal 1 idly.
5. The magnetic force of the magnet 51 provided by the pedal 1 can be adjusted according to the different build of user, allowing a bicycle to be fitted with the pedal 1 and the sole cleat 2 (clipless pedal) of various magnetic force (Gauss value). For example, a tall and strong user can use the pedal 1 and the sole cleat 2 in a stronger magnetic force, so that the pedal 1 will not be separated with the sole cleat 2 to cause stepping idly in riding due to that the stepping force is too strong. On the other hand, a small and weak user can use the pedal 1 and the sole cleat 2 in a weaker magnetic force, so that the pedal 1 can be separated with the sole cleat 2 easily, without supporting the leg rapidly that the leg cannot step on the ground to fall off, due to that the force of pulling off the leg is not strong enough as the magnetic force of the magnet 51 is too strong.

## Claims

1. An elastic assembly structure for a bicycle pedal, comprising:
a pedal (1), two ends of which are provided respectively with a front end (11) and
a rear end (12), with the front end (11) being provided with a rabbet (13);
a sole cleat (2), two ends of which are provided respectively with a front end (21) and a rear end (22), with the front end (21) being provided with a close-fit member (23) to be latched into the rabbet (13); and
an elastic element (3), which is removably connected between the rear end (12) of the pedal (1) and the rear end (21) of the sole cleat (2), with that the rear end (22) of the sole cleat (2) to be put down and attached tightly to the rear end (12) of the pedal (1), such that the rear end (12) of the pedal (1) and the rear end (22) of the sole cleat (2) are collected elastically with respect to each other, and the rear end (22) of the sole cleat (2) is bent and moved upward, allowing the rear end (12) of the pedal (1) and the rear end (22) of the sole cleat (2) to be elastically expanded with respect to each other, and the rear end (22) of the sole cleat (2) to elastically lift up and drive the rear end (12) of the pedal (1) through the elastic element (3).

2. The elastic assembly structure for a bicycle pedal, according to claim 1, wherein the rear end (12) of the pedal (1) is provided with a first assembly piece (5), an end of the elastic element (3) is fixed on a bottom of the rear end (22) of the sole cleat (2), the other end of the elastic element (3) is provided with a second assembly piece (6), and the first assembly piece (5) and the second assembly piece (6) are assembled together and separated from each other.

3. The elastic assembly structure for a bicycle pedal, according to claim 2, wherein the first assembly piece (5) is a magnet (51), and the second assembly piece (6) is a metallic bottom plate (61).

4. The elastic assembly structure for a bicycle pedal, according to claim 3, wherein the magnet (51) is disposed on a top of the rear end (12) of the pedal (1), the rear end (22) of the sole cleat (2) is provided with a guide slot (25) facing toward the top of the rear end (12) of the pedal (1), the metallic bottom plate (61) is disposed in the guide slot (25), the elastic element (3) is configured in the guide slot (25), an end of the elastic element (3) is disposed on an inner wall of the guide slot (25), and the other end of the elastic element (3) is connected on the metallic bottom plate (61).

5. The elastic assembly structure for a bicycle pedal, according to claim 4, wherein the top of the rear end (12) of the pedal (1) is provided with a receiving slot (15), the magnet (51) is disposed in the receiving slot (15), the guide slot (25) is provided with a slot opening (251) facing toward the top of the rear end (12) of the pedal (1), the inner wall of the guide slot (25) is provided with a guide rail (252) extending to the slot opening (251), a periphery of the metallic bottom plate (61) is provided with a lug plate (62), the lug plate (62) is provided with a dent (63), the dent (63) is sheathed on the guide rail (252) to guide the metallic bottom plate (61) to move along the guide rail (252), and an inner wall of the slot opening (251) is provided with a rib (253) to stop the lug plate (62).

6. The elastic assembly structure for a bicycle pedal, according to claim 5, wherein the metallic bottom plate (61) and the elastic element (3) are combined together by a mounting bracket (7).

7. The elastic assembly structure for a bicycle pedal, according to claim 3, wherein the magnet (51) is plural, including one large magnet and two small magnets (51a), (51b), three magnets in an average size (51c), (51d), or four magnets (51e), (51f), (51g), (51h), with that the adsorbability of the one large and two small magnets (51a), (51b) is between 3400 GS and 5100 GS, the adsorbability of the three magnets in the average size (51c), (51d) is between 4200 GS and 5200 GS, and the adsorbability of the four magnets (51e), (51f), (51g), (51h) is between 4000 GS and 5100 GS.

8. The elastic assembly structure for a bicycle pedal, according to claim 1, wherein the rear end (22) of the sole cleat (2) is provided with a first assembly piece (5), an end of the elastic element (3) is fixed on the top of the rear end (12) of the pedal (1), the other end of the elastic element (3) is provided with a second assembly piece (6), the first assembly piece (5) and the second assembly piece (6) are assembled together and separated from each other, the first assembly piece (5) is a magnet (51), and the second assembly piece (6) is a metallic bottom plate (61) or magnet (51).

9. The elastic assembly structure for a bicycle pedal, according to claim 3 or claim 4 or claim 5 or claim 6 or claim 8, wherein the magnet (51) is provided with a magnetic permeable metal strip (8).

10. The elastic assembly structure for a bicycle pedal, according to claim 3 or claim 4 or claim 5 or claim 6 or claim 8, wherein the adsorbability of the magnet is (51) between 2800 GS and 5200 GS.

11. The elastic assembly structure for a bicycle pedal, according to claim 1 or claim 2 or claim 3 or claim 4 or claim 5 or claim 6 or claim 7 or claim 8, wherein the elastic element (3) is a spring (31).

12. The elastic assembly structure for a bicycle pedal, according to claim 1 or claim 2 or claim 3 or claim 4 or claim 5 or claim 6 or claim 7 or claim 8, wherein the top of the rear end (12) of the pedal (1) is provided with a rear baffle (17) to be stopped at an exterior side to the rear end (22) of the sole cleat (2).

13. The elastic assembly structure for a bicycle pedal, according to claim 1 or claim 2 or claim 3 or claim 4 or claim 5 or claim 6 or claim 7 or claim 8, wherein two sides of the rear end (22) of the sole cleat (2) are provided respectively with a support member (27), the support member (27) is sheathed on each side of the rear end (12) of the pedal (1) to guide the rear end (22) of the sole cleat (2) to dock with the rear end (12) of the pedal (1), a side of the pedal (1) is provided with a spindle bore (14), an interior of the spindle bore (14) is pivoted with a shaft (18) of crank, the shaft (18) is sheathed with plural ball bearing (19), and the sole cleat (2) is provided with plural lock holes (24).

14. The elastic assembly structure for a bicycle pedal, according to claim 1 or claim 2 or claim 3 or claim 4 or claim 5 or claim 6 or claim 7 or claim 8, wherein an inner wall of the top of the rabbet (13) is provided with an inner inclined plane (131), an outer wall of the top of the close-fit member (23) is provided with an outer inclined plane (231) which is attached on the inner inclined plane (131), the close-fit member (23) and the rabbet (13) are latched together, an included angle between the inner inclined plane (131) and the horizontal plane is between 55° and 75°, and an included angle between the outer inclined plane (231) and the horizontal plane is between 55° and 75°.

15. The elastic assembly structure for a bicycle pedal, according to claim 14, wherein a bottom of the close-fit member (23) is provided with a dent (63), and a gap (S) is formed between the dent (63) and the inner wall of the rabbet (13).
